# EUROPEAN PATENT APPLICATION

(11) **EP 0 640 468 A1**
(43) Date of publication of application: **01.03.1995**
(21) Application number: 94401895.1
(22) Date of filing: 25.08.1994
(51) Int. Cl.: B29D 5/10, B65D 33/25

(54) **Zipper material and configuration**

(30) Priority: 27.08.1993 US 113398
(71) Applicant: ILLINOIS TOOL WORKS INC., Glenview, Illinois 60025-5811 (US)
(72) Inventor: Carlson, Todd, Frankfort, Illinois 60423 (US)
(74) Representative: Schrimpf, Robert

(57) **Abstract**

A resealable package formed from one or more sheets of an ionomer resin includes an ethylene-methacrylic acid copolymer in the zipper, or between the zipper and the sheet or sheets. The zipper itself includes male and female interlocking zipper profiles, one or both of which may be extruded from an ethylene-methacrylic acid copolymer. Alternatively, strips (22) of this copolymer may be applied to the sheet or sheets (20) of ionomer resin, and male and female profiles (24,26) of a more commonly used polymeric material, such as low density polyethylene, may be applied to the strips. Ribs (28) of the ethylene-methacrylic acid copolymer may also be applied to the sheet or sheets parallel to the male and female profiles, where the profiles are not of the ethylene-methacrylic acid copolymer material.

## Description

### Background of the Invention

### 1. Field of the Invention

The present invention relates to the manufacture of plastic bags or packages having at least two plies of thermoplastic sheeting, both plies having closure strips included on their facing inner edges so as to form a zipper-like closure for the openings of the bags or packages made therefrom. The plies may be formed from two separate sheets or from a single sheet folded over.

### 2. Description of the Prior Art

The present invention relates to improvements in the package-making art and may be practiced, without limitation, in the manufacture of thermoplastic bags and trays of the kind that may be used for various consumer products, but which are particularly useful for food products which must be kept in moisture- and air-tight packages, free from leakage until opened for access to the product contents, which packages are then reclosable by zipper means to protect any remainder of the product therein.

The indicated art is fairly well developed, but nevertheless is still susceptible of improvements contributing to increased efficiency and cost effectiveness.

In recent years, reclosable food packages have been made from sheets of an ionomer resin available from Dupont under the name SURLYN®. This material is an ethylene-methacrylic acid copolymer wherein the acid sites are cross-linked by metallic cations. The choice of metallic cation to be used is governed by what ultimately is to be packaged. For example, sodium will make the sheet more resistant to oil and grease, and, for this reason, may be used to produce sheets for packaging meat. Zinc, on the other hand, yields a sheet which is less sensitive to water.

Male and female interlocking zipper profiles are most commonly extruded from low density polyethylene (LDPE). Problems are encountered, however, when one attempts to extrude or to seal a polyethylene zipper onto SURLYN® materials. Because polyethylene bonds poorly to SURLYN® materials, it is difficult to obtain a satisfactory adherence of the zipper to the sheet and to avoid leakage through the zipper ends, after zipper bags have been made from the SURLYN® sheet to which the polyethylene zipper has been attached.

Clearly, these difficulties would be overcome by making the zipper from a material naturally more compatible with SURLYN® than polyethylene. A solution to these difficulties is provided by the present invention.

### Summary of the Invention

The present invention is a resealable package of the type described above, but which includes an ethylene-methacrylic acid copolymer in the zipper, or between the zipper and the sheet or film from which the package is made.

The ethylene-methacrylic acid copolymer, available from Dupont under the name NUCREL®, is more compatible with SURLYN® than is polyethylene. This may be because NUCREL® is a precursor to SURLYN®. By adding zinc or sodium cations to NUCREL®, the cations cross-link the acid sites to form SURLYN®.

In short, the present invention involves the use of NUCREL® as a zipper material, or as a material used in combination with a zipper. More specifically, the entire zipper, that is, both male and female interlocking zipper profiles, may be made of NUCREL®. Alternatively, the male profile may be made from NUCREL®, while the female profile may be made from low density polyethylene (LDPE).

Further, a base layer of NUCREL® may be disposed between the male and female interlocking zipper profile and the SURLYN® base layer. Finally, NUCREL® ribs may be disposed on either side of the male and female profiles.

The present invention also includes methods for making the subject resealable packages, and will now be described in more complete detail below with reference being made to the figures, which may be identified as follows.

### Brief Description of the Drawings

Figure 1 is a cross-sectional view of a film base layer having male and female interlocking zipper profiles attached thereto and representing an embodiment of the present invention.

Figure 2 is a cross-sectional view of an alternate embodiment of the present invention.

Figure 3 is a cross-sectional view of yet another embodiment of the present invention.

Figure 4 is a side view of an apparatus for attaching male and female interlocking zipper profiles to a film base layer.

Figure 5 is a view of the same apparatus taken from the right side of that shown in Figure 4.

### Detailed Description of the Preferred Embodiments

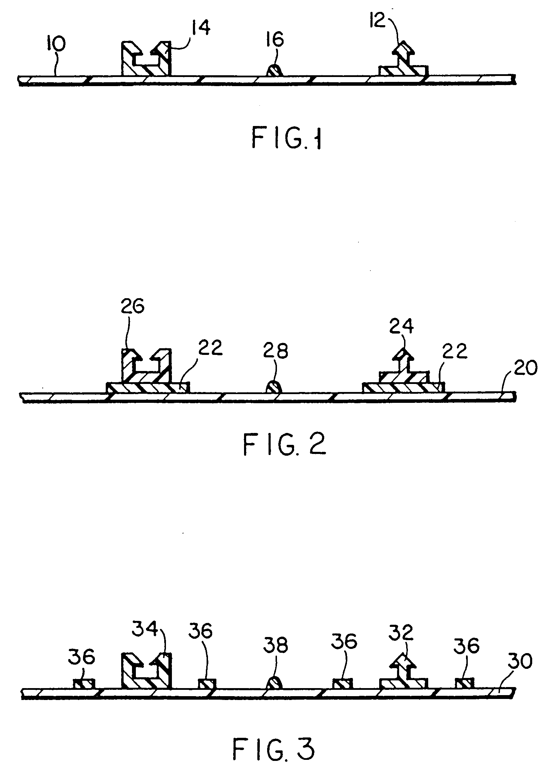

Referring to Figure 1, a cross-sectional view of a film base layer having male and female interlocking zipper profiles attached thereto, a film base layer 10 of an ionomer resin, such as SURLYN®, which is an ethylene-methacrylic acid copolymer with acid sites cross-linked by metallic cations, has a male interlocking zipper profile 12 and a female interlocking zipper profile 14. The profiles 12, 14 may both be made of NUCREL®, an ethylene-methacrylic acid copolymer. However, NUCREL® is an expensive material, fairly difficult to form into a zipper profile and difficult to process. As the female interlocking zipper profile 14 is the more difficult to form from NUCREL®, an alternate embodiment of that shown in Figure 1 may include a female interlocking zipper profile 14 of low density polyethylene (LDPE).

A tear bead 16 may be provided in this first, and all the other, embodiments of the present invention between the male and female interlocking zipper profiles 12,14. The tear bead 16 may also be of NUCREL®. When the film base layer 10 is folded to produce a resealable package, the tear bead 16 is more or less exactly inside the fold above the interlocked male and female interlocking zipper profiles 12,14. When torn out by the consumer, access to the zipper is obtained.

In Figure 2, a SURLYN® film base layer 20 has two base strips 22 of NUCREL®. Polyethylene (LDPE) male and female interlocking zipper profiles 24,26 are attached to the base strips 22. Preferably, the cross-sectional area of each base strip 22 is at least 30% that of either the male or female interlocking zipper profiles 24,26. In this embodiment, the use of base strips 22 enables one to still use traditionally easy to process materials, such as polyethylene, for the profiles 24,26.

Again, a tear bead 28 may be provided between the male and female interlocking zipper profiles 24,26.

In Figure 3, a SURLYN® film base layer 30 has male and female interlocking zipper profiles 32,34, which may be of low density polyethylene (LDPE). On each side of the male and female profiles 32,34 may be NUCREL® ribs 36, which also eliminate the problems of adhesion and leakage. Tear bead 38 may again be provided between the male and female profiles 32,34.

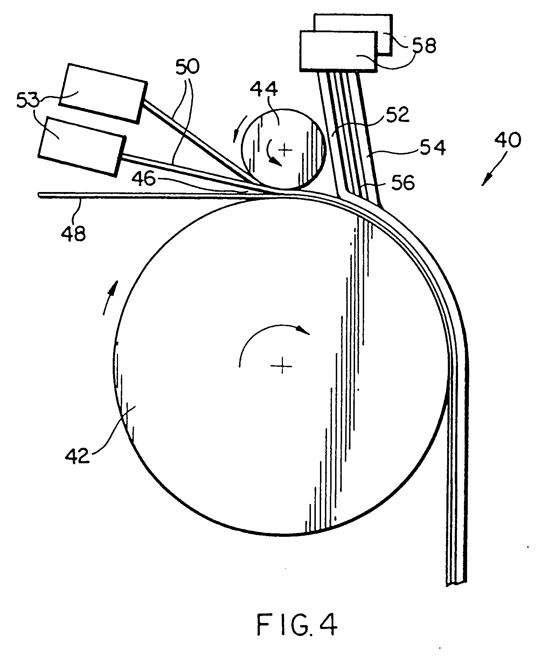

Figure 4 is a side view of an apparatus 40 for attaching male and female interlocking zipper profiles to a film base layer. The apparatus 40 includes a first roller 42 and a second roller 44, which are adjacent to one another and form a nip 46 therebetween. A film base layer 48, perhaps of SURLYN® ionomer resin, passes through nip 46 with two base strips 50, extruded from NUCREL® by extruders 52. This ensures that the base strips 50 may be flattened against the film base layer 48. The base strips 50 are disposed parallel to one another on the film base layer 48, not one atop the other as may be suggested by their representation in Figure 4.

Upon its exit from nip 46, a male interlocking zipper profile 52, a female interlocking zipper profile 54, and a tear bead 56 are applied by extrusion onto film base 48. The male profile 52 is applied to one of the base strips 50, while the female profile 54 os applied to the other. The tear bead 56 is disposed between the two profiles 52,54.

The male and female profiles 52,54 and the tear bead 56 are extruded by extruders 58. The male profile 52 and the tear bead 56 may be extruded from NUCREL® resin, while the female profile 54 may be extruded from either NUCREL® or a low density polyethylene (LDPE) resin.

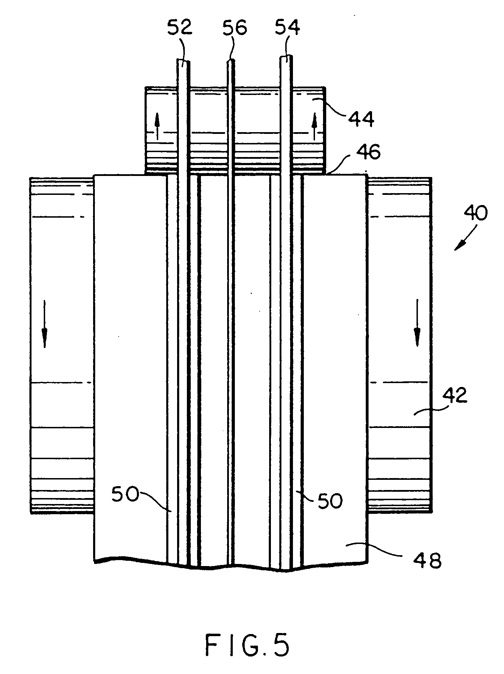

Figure 5 is a view of apparatus 40 taken from the right side of that shown in Figure 4. Film base layer 48, having two base strips 50 flattened thereagainst, emerges from the nip 46 formed by the first and second rollers 42,44. The male interlocking zipper profile 52 is extruded onto one of the base strips 50, while the female profile 54 is extruded onto the other base strip 50. The tear bead 56 is applied directly to the film base layer 48 between the male and female profiles 52,54.

Modifications to the above would be obvious to anyone skilled in the art, but would not bring the method so modified beyond the scope of the appended claims.

## Claims

1. A method of attaching male and female interlocking zipper profiles to a film base layer comprising:
providing a film base layer of an ionomer resin, said resin being an ethylene-methacrylic acid copolymer having acid sites cross-linked by metallic cations;
providing at least one base strip of an ethylene-methacrylic acid copolymer;
attaching said at least one base strip to said film base layer;
providing said male and female interlocking zipper profiles; and
attaching said male and female interlocking zipper profiles to said at least one base strip.

2. A method as claimed in claim 1 wherein said at least one base strip is applied to said film base layer by passing same concurrently through a nip formed between two adjacent rollers, said rollers flattening said at least one base strip against said film base layer.

3. A method as claimed in claim 1 wherein said at least one base strip are two base strips

4. A method as claimed in claim 1 wherein said male interlocking zipper profile is obtained by extrusion from a low density polyethylene resin.

5. A method as claimed in claim 1 wherein said male interlocking zipper profile is obtained by extrusion from an ethylene-methacrylic acid copolymer.

6. A method as claimed in claim 1 wherein said female interlocking zipper profile is obtained by extrusion from a low density polyethylene resin.

7. A method as claimed in claim 1 wherein said female interlocking zipper profile is obtained by extrusion from an ethylene-methacrylic acid copolymer.

8. A method as claimed in claim 1 wherein said at least one base strip has a cross-sectional area equal to at least 30% of the cross-sectional area of one of said male and female interlocking profiles.

9. A method as claimed in claim 3 wherein said male interlocking profile is attached to one of said two base strips and said female interlocking profile is attached to the other of said two base strips.

10. A method as claimed in claim 1 further comprising the strip of attaching a tear bead to said film base layer between said male and female interlocking zipper profiles.

11. A method as claimed in claim 10 wherein said tear bead is obtained by extrusion from an ethylene-methacrylic acid copolymer.

12. A method as claimed in claim 1 further comprising the step of attaching a first rib of an ethylene-methacrylic acid copolymer to said film base layer substantially adjacent to one side of said male interlocking zipper profile.

13. A method as claimed in claim 12 further comprising the step of attaching a second rib of an ethylene-methacrylic acid copolymer to said film base layer substantially adjacent to the other side of said male interlocking zipper profile.

14. A method as claimed in claim 1 further comprising the step of attaching a first rib of an ethylene-methacrylic acid copolymer to said film base layer substantially adjacent to one side of said female interlocking zipper profile.

15. A method as claimed in claim 14 further comprising the step of attaching a second rib of an ethylene-methacrylic acid copolymer to said film base layer substantially adjacent to the other side of said female interlocking zipper profile.

16. A method of attaching male and female interlocking zipper profiles to a film base layer comprising:
providing a film base layer of ionomer resin, said resin being an ethylene-methacrylic acid copolymer having acid sites cross-linked by metallic cations;
providing said male and female interlocking zipper profiles; and
applying said male and female interlocking zipper profiles to said film base layer.

17. A method as claimed in claim 16 wherein said male interlocking zipper profile is obtained by extrusion from a low density polyethylene resin.

18. A method as claimed in claim 16 wherein said male interlocking zipper profile is obtained by extrusion from an ethylene-methacrylic acid copolymer.

19. A method as claimed in claim 16 wherein said female interlocking zipper profile is obtained by extrusion from a low density polyethylene resin.

20. A method as claimed in claim 16 wherein said female interlocking zipper profile is obtained by extrusion from an ethylene-methacrylic acid copolymer.

21. A method as claimed in claim 16 further comprising the step of attaching a tear bead to said film base layer between said male and female interlocking zipper profiles.

22. A method as claimed in claim 21 wherein said tear bead is obtained by extrusion from an ethylene-methacrylic acid copolymer.

23. A method as claimed in claim 16 further comprising the step of attaching a first rib of an ethylene-methacrylic acid copolymer to said film base layer substantially adjacent to one side of said male interlocking zipper profile.

24. A method as claimed in claim 23 further comprising the step of attaching a second rib of an ethylene-methacrylic acid copolymer to said film base layer substantially adjacent to the other side of said male interlocking zipper profile.

25. A method as claimed in claim 16 further comprising the step of attaching a first rib of an ethylene-methacrylic acid copolymer to said film base layer substantially adjacent to one side of said female interlocking zipper profile.

26. A method as claimed in claim 25 further comprising the step of attaching a second rib of an ethylene-methacrylic acid copolymer to said film base layer substantially adjacent to the other side of said female interlocking zipper profile.

27. A resealable package comprising:
a film base layer of an ionomer resin, said resin being an ethylene-methacrylic acid copolymer having acid sites cross-linked by metallic cations, said film base layer being foldable so as to provide two mutually facing portions;
a first base strip of an ethylene-methacrylic acid copolymer attached to one of said two mutually facing portions;
a second base strip of an ethylene-methacrylic acid copolymer attached to the other of said two mutually facing portions;
a male interlocking zipper profile attached to said first base strip; and
a female interlocking zipper profile attached to said second base strip.

28. A resealable package as claimed in claim 27 wherein said male interlocking zipper profile is of a low density polyethylene resin.

29. A resealable package as claimed in claim 27 wherein said male interlocking zipper profile is of an ethylene-methacrylic acid copolymer.

30. A resealable package as claimed in claim 27 wherein said female interlocking zipper profile is of a low density polyethylene resin.

31. A resealable package as claimed in claim 27 wherein said female interlocking zipper profile is of an ethylene-methacrylic acid copolymer.

32. A resealable package as claimed in claim 27 wherein said first base strip has a cross-sectional area equal to at least 30% of the cross-sectional area of said male interlocking zipper profile.

33. A resealable package as claimed in claim 27 wherein said second base strip has a cross-sectional area equal to at least 30% of the cross-sectional area of said female interlocking zipper profile.

34. A resealable package as claimed in claim 27 further comprising a tear bead, said tear bead being on said film base layer between said male and female interlocking zipper profiles.

35. A resealable package as claimed in claim 34 wherein said tear bead is of an ethylene-methacrylic acid copolymer.

36. A resealable package as claimed in claim 27 further comprising a first rib of an ethylene-methacrylic acid copolymer on said film base layer substantially adjacent to one side of said male interlocking zipper profile.

37. A resealable package as claimed in claim 36 further comprising a second rib of an ethylene-methacrylic acid copolymer on said film base layer substantially adjacent to the other side of said male interlocking zipper profile.

38. A resealable package as claimed in claim 27 further comprising a first rib of an ethylene-methacrylic acid copolymer on said film base layer substantially adjacent to one side of said female interlocking zipper profile.

39. A resealable package as claimed in claim 38 further comprising a second rib of an ethylene-methacrylic acid copolymer on said film base layer substantially adjacent to the other side of said female interlocking zipper profile.

40. A resealable package comprising:
a film base layer of an ionomer resin, said resin being an ethylene-methacrylic acid copolymer having acid sites cross-linked by metallic cations, said film base layer being foldable so as to provide two mutually facing portions;
a male interlocking zipper profile attached to one of said two mutually facing portions; and
a female interlocking zipper profile attached to the other of said two mutually facing portions.

41. A resealable package as claimed in claim 40 wherein said male interlocking zipper profile is of a low density polyethylene resin.

42. A resealable package as claimed in claim 40 wherein said male interlocking zipper profile is of an ethylene-methacrylic acid copolymer.

43. A resealable package as claimed in claim 40 wherein said female interlocking zipper profile is of a low density polyethylene resin.

44. A resealable package as claimed in claim 40 wherein said female interlocking zipper profile is of an ethylene-methacrylic acid copolymer.

45. A resealable package as claimed in claim 40 further comprising a tear bead, said tear bead being on said film base layer between said male and female interlocking zipper profiles.

46. A resealable package as claimed in claim 45 wherein said tear bead is of an ethylene-methacrylic acid copolymer.

47. A resealable package as claimed in claim. 40 further comprising a first rib of an ethylene-methacrylic acid copolymer on said film base layer substantially adjacent to one side of said male interlocking zipper profile.

48. A resealable package as claimed in claim 47 further comprising a second rib of an ethylene-methacrylic acid copolymer on said film base layer substantially adjacent to the other side of said male interlocking zipper profile.

49. A resealable package as claimed in claim 40 further comprising a first rib of an ethylene-methacrylic acid copolymer on said film base layer substantially adjacent to one side of said female interlocking zipper profile.

50. A resealable package as claimed in claim 49 further comprising a second rib of an ethylene-methacrylic acid copolymer on said film base layer substantially adjacent to the other side of said female interlocking zipper profile.
